# EUROPÄISCHE PATENTSCHRIFT

(11) **EP 3 315 920 B1**
(45) Veröffentlichungstag und Bekanntmachung des Hinweises auf die Patenterteilung: **09.09.2020**
(21) Anmeldenummer: 17193029.0
(22) Anmeldetag: 26.09.2017
(51) Int. Cl.: G01D 9/00, H04W 4/18

(54) **DATENLOGGER UND VERFAHREN ZUR ÜBERTRAGUNG VON DATEN VOM DATENLOGGER ZU EINEM EXTERNEN DATENVERARBEITUNGSGERÄT**
DATA LOGGER AND METHOD FOR TRANSMITTING DATA FROM THE DATA LOGGER TO AN EXTERNAL DATA PROCESSING APPARATUS
ENREGISTREUR DE DONNÉES ET PROCÉDÉ DESTINÉ À LA TRANSMISSION DE DONNÉES DE L'ENREGISTREUR DE DONNÉES À UN APPAREIL DE TRAITEMENT DE DONNÉES EXTERNE

(30) Priorität: 25.10.2016 CH 14312016
(43) Veröffentlichungstag der Anmeldung: 02.05.2018
(73) Patentinhaber: Elpro-Buchs AG, 9470 Buchs (CH)
(72) Erfinder: Neumann, Dirk, 7310 Bad Ragaz (CH); Rudolf, Beat, 7206 Igis (CH)
(74) Vertreter: Bohest AG

(56) Entgegenhaltungen:
- US-A1- 2015 142 387
- "Funk-Sensor-Wechselstromzähler ESA 1000WZ-LED", ELV Journal , 1. März 2009 (2009-03-01), XP002767245, Gefunden im Internet: URL:https://www.elv.de/Funk-Sensor-Wechsel stromz%C3%A4hler-ESA-1000WZ-LED/x.aspx/cid _726/detail_30914 [gefunden am 2017-02-14]

## Beschreibung

Die Erfindung betrifft einen Datenlogger gemäss dem Oberbegriff des unabhängigen Vorrichtungsanspruchs. Die Erfindung auch ein Verfahren zur Übertragung von Daten vom Datenlogger zu einem externen Datenverarbeitungsgerät gemäss dem Oberbegriff des unabhängigen Verfahrensanspruchs.

Als Datenlogger im Sinne der vorliegenden Erfindung werden elektronische Geräte bezeichnet, die verschiedene Umweltparamenter, beispielsweise Temperatur und/oder Feuchte, über Zeit automatisch überwachen und aufzeichnen. Ein Datenlogger enthält einen Messfühler, der die Informationen aufnimmt, und einen oder mehrere elektronische Schaltkreise zur Speicherung, Digitalisierung und gegebenenfalls Auswertung von Messdaten und zur Übermittlung von Daten an ein externes Datenverarbeitungsgerät. Datenlogger werden in der Regel überall dort eingesetzt, wo eine Langzeitaufnahme von Messparametern vorgenommen werden soll, ohne dass ständig Überwachungspersonal vor Ort anwesend ist. So werden Datenlogger vor allem bei Feldversuchen, bei der Überwachung von Transporten, z. B. bei der Überwachung von Beschleunigungs-, Vibrations- und Klimawerten bei LKW- oder Bahntransporten, zur Aufzeichnung von Feuchte- und Temperaturwerten beim Transport und in Lagerhäusern, in der Pharma- und Lebensmittelindustrie, zur Fehleranalyse von Systemen, beispielsweise zur Erfassung von Spannungsschwankungen in oder an einem System, zur Überwachung und Alarmierung bei Produktionsprozessen und bei Qualitätsstudien, in Forschung, Entwicklung und in der Ausbildung verwendet. Auch im Hobbybereich, beispielsweise bei Modellflugzeugen, kommen Datenlogger zur Aufzeichnung und Überwachung von Messdaten zum Einsatz.

Dokument Dl = US 2015/142387 A1 (s. Zusammenfassung) offenbart einen Datenlogger einer elektronischen Zigarette, Dokument D2 = "Funk-Sensor-Wechselstromzähler ESA 1000WZ-LED" (s. Beschreibung) offenbart einen Funk-Sensor-Wechselstromzähler, dessen Energieverbrauch über Blinkimpulse signalisiert wird, wobei diese Impulse von einer Mikrokontrollereinheit ausgewertet werden.

Die über einen längeren Zeitraum erfassten und abgespeicherten Messdaten können bei Bedarf weiterverarbeitet, grafisch dargestellt und zur Dokumentation statistisch ausgewertet werden. Neben den Messdaten erfassen Datenlogger vielfach auch verschiedene vordefinierte Ereignisse, wie z.B. einen Batteriewechsel, einen Bedienereingriff oder den Wechsel einer Speicherkarte, die während eines Überwachungszeitraums am Gerät stattfinden. Damit sollen derartige Datenlogger insbesondere ein wichtiges Kriterium der Pharma-, Lebensmittel- und Chemieindustrie, das gemeinhin unter der Bezeichnung Audit Trail bekannt ist, erfüllen. Die vom Datenlogger erfassten Messdaten und die Daten für den Audit Trail werden in einem internen Gerätespeicher abgelegt. Für die Auswertung aller Daten wird der Datenlogger üblicherweise per Kabel mit einer Datenverarbeitungsanlage, z.B. einem PC, verbunden, um die Daten auszulesen. Das Auslesen der Daten kann auch über ein kabelgestütztes oder auch ein kabelloses LAN oder dergleichen Verbindung erfolgen. Es sind auch bereits Datenlogger bekannt, die einen Datentransfer via WiFi-Technologie, Bluetooth oder NFC-Technologie an Smartphones oder Tabletcomputer ermöglichen. Nach dem Auslesen der Daten können diese mit einer üblicherweise gerätespezifischen Auswertesoftware bearbeitet werden, um sie in Form von Tabellen, Grafiken darzustellen und Dokumente oder Berichte zu erstellen. Diese bekannten Datenlogger weisen einen relativ komplexen Aufbau auf und erfordern entsprechende kabelgebundene oder kabellose Schnittstellen zum Auslesen bzw. zur Übertragung der Messdaten.

Einige der aus dem Stand der Technik bekannten Datenlogger sind mit einer Bildschirmanzeige ausgestattet, welche eine unmittelbare Darstellung und Anzeige von Messdaten und geräteinternen Auswertungen ermöglichen kann. Weitere bekannte Datenlogger weisen eine oder mehrere LEDs auf, mit denen der Systemzustand angezeigt werden kann. Die LEDs können in einigen der bekannten Datenlogger auch für eine Anzeige von Grenzwertüberschreitungen eines oder mehrerer überwachter Parameter eingesetzt werden. Mithilfe derartiger Datenlogger kann beispielsweise auch das Verfalldatum eines Produkts überwacht und bei Überschreitung mittels einer LED angezeigt werden.

Aufgabe der vorliegenden Erfindung ist es, einen kostengünstigen Datenlogger zu schaffen, bei dem auf komplexe Datenschnittstellen für eine drahtgebundene bzw. aufwendige Sende- bzw. Empfangseinrichtungen für eine drahtlose Datenübermittlung verzichtet werden kann. Der Datenlogger soll einen einfachen Aufbau aufweisen; auf platzraubende und energieintensive Bildschirmanzeigen soll verzichtet werden können. Dabei soll ein Datenauslesen mit handelsüblichen Smartphones bzw. Tabletcomputern ermöglicht sein.

Die Lösung dieser und weiterer Aufgaben besteht in einem Datenlogger, welcher die im unabhängigen Vorrichtungsanspruch angeführten Merkmale aufweist, sowie in einem Verfahren zur Datenübertragung gemäss den Merkmalen des unabhängigen Verfahrensanspruchs. Weiterbildungen und/oder vorteilhafte Ausführungsvarianten der Erfindung sind Gegenstand der jeweiligen abhängigen Vorrichtungs- bzw. Verfahrensansprüche.

Durch die Erfindung wird ein Datenlogger vorgeschlagen, der Funktionseinheiten zur Erfassung, Digitalisierung, Speicherung und gegebenenfalls Auswertung von Messdaten und zur drahtlosen Übermittlung von Daten an ein externes Datenverarbeitungsgerät aufweist. Das externe Datenverarbeitungsgerät ist mit einer fototechnischen Erfassungseinrichtung zur Aufzeichnung von statischen und/oder dynamischen Mustern elektromagnetischer Strahlung ausgestattet. Der Datenlogger weist eine elektromagnetische Strahlung emittierende und/oder remittierende Anzeigeeinrichtung auf. Die Funktionseinheit zur Übermittlung der Daten ist derart mit der elektromagnetische Strahlung emittierenden und/oder remittierenden Anzeigeeinrichtung gekoppelt, dass die Daten durch eine zeitlich und/oder intensitätsmässig gesteuerte Aktivierung der elektromagnetische Strahlung emittierenden und/oder remittierenden Anzeigeeinrichtung in kodierter Form übermittelbar sind.

Der erfindungsgemäss ausgebildete Datenlogger besitzt einen sehr einfachen und kostengünstigen Aufbau. Die Datenübermittlung kann unmittelbar in kodierter Form über eine am Gerät vorgesehen elektromagnetische Strahlung emittierende und/oder remittierende Anzeigeeinrichtung erfolgen. Die Anzeigeeinrichtung kann dabei aktiv oder passiv ausgebildet sein. Aktiv bedeutet dabei, dass die Anzeigeeinrichtung selbst zur Emission von elektromagnetischer Strahlung ausgebildet ist. Eine passive Anzeigeeinrichtung emittiert selbst keine elektromagnetische Strahlung, sondern ist auf eine externe Strahlungsquelle angewiesen. Bei Bestrahlung, insbesondere Beleuchtung, remittiert die passive Anzeigeeinrichtung einen Teil der eingestrahlten elektromagnetischen Strahlung.

Bei dem erfindungsgemässen Datenlogger kann auf standardisierte Datenschnittstellen, wie beispielsweise eine USB Schnittstelle am Gehäuse des Datenloggers, Bluetooth, ZigBee, WLAN oder NFC, verzichtet werden. Bei den Daten kann es sich um gemessene Rohdaten und/oder auch um Ergebnisse der bereits ausgewerteten Messdaten handeln. Es können vollständige Datensätze übertragen werden oder auch nur Auszüge aus den Daten. Die kodiert übermittelten Daten können unmittelbar von einem externen Datenverarbeitungsgerät erfasst und aufgezeichnet werden, indem dessen fototechnische Erfassungseinrichtung die von der elektromagnetische Strahlung emittierenden und/oder remittierenden Anzeigeeinrichtung erzeugten statischen und/oder dynamischen Lichtmuster registriert und in einer Speichereinheit des Datenverarbeitungsgeräts für eine Weiterverarbeitung abspeichert. Gegebenenfalls kann der Datenlogger noch eine Taste bzw. einen Bedienknopf aufweisen, um verschiedene Modi des Datenloggers, beispielsweise Ein/Aus, Messmodus, Übermittlungsmodus, anzuwählen.

Die elektromagnetische Strahlung emittierende bzw. remittierende Anzeigeeinrichtung kann beispielsweise eine Bildschirmeinrichtung sein, die nicht nur zur Anzeige von Text und/oder Werten genutzt werden kann, sondern auf der zur Datenübermittlung kodierte statische und/oder dynamische Lichtmuster angezeigt werden, die von der fototechnischen Erfassungseinrichtung des Datenverarbeitungsgeräts erfasst werden können.

In einer Ausführungsvariante des Datenloggers kann die elektromagnetische Strahlung emittierende und/oder remittierende Anzeigeeinrichtung ein oder mehrere elektronische Bauteile umfassen, die bei entsprechender Ansteuerung die elektromagnetische Strahlung emittieren und/oder remittieren. Die elektromagnetische Strahlung kann dabei im sichtbaren Wellenlängenspektrum von ca. 380 nm bis ca. 780 nm liegen, oder es kann sich dabei um Infrarotstrahlung von ca. 780 nm bis 1mm handeln. Es sind auch kombinierte Emissionen und/oder Remissionen von sichtbarer Strahlung und Infrarotstrahlung möglich. Auch können Kombinationen von Emisionen und Remissionen von elektromagnetischer Strahlung vorgesehen sein.

Die elektromagnetische Strahlung emittierenden und/oder remittierenden Bauteile können in einer weiteren Ausführungsvariante ein oder mehrere Halbleiterbauteile umfassen. Beispielsweise können die Halbleitebauteile eine oder mehrere Leuchtdioden sein. Leuchtdioden für Emissionen im sichtbaren und im infraroten Wellenlängenspektrum sind hinlänglich bekannt. Sie sind kostengünstig in der Herstellung und erfordern für ihren Betrieb nur relativ geringe Energiemengen. Bei vielen der bekannten Datenlogger sind ohnehin bereits eine oder mehrere Leuchtdioden am Gerät angeordnet, beispielsweise um damit einen Betriebszustand des Datenloggers anzuzeigen. Die Leuchtdioden am erfindungsgemässen Datenlogger können dann nicht mehr nur einen Betriebszustand anzeigen, sondern können unmittelbar zur kodierten Datenübertragung an ein externes Datenerfassungsgerät eingesetzt werden. Eine alternative Ausführungsvariante kann vorsehen, dass die elektromagnetische Strahlung emittierenden und/oder remittierenden Bauteile Flüssigkristallelemente oder elektromagnetisches Papier umfassen. Eine Flüssigkristallelemente aufweisende Anzeigeeinrichtung benötigt eine externe Beleuchtung mit einer primären Lichtquelle. Die remittierte bzw. reflektierte elektromagnetische Strahlung kann dann von einem externen Datenerfassungsgerät aufgezeichnet werden. Elektronisches Papier ist gleichfalls eine passive Anzeigeeinrichtung und bedarf daher einer Beleuchtung mit einer primären Lichtquelle. Es wird beispielsweise für Displays von sogenannten E-Book Readern eingesetzt oder als Preisettikette im Detailhandel verwendet. Gegenüber diesen statischen Anzeigen unterscheidet sich der Einsatz von elektronischem Papier bei einem erfindungsgemässen Datenlogger durch die gesteuerte Dynamik der Anzeige.

Eine weitere Ausführungsvariante des Datenloggers kann vorsehen, dass neben wenigstens einem Halbleiterbauteil bzw. elektronischem Bauteil für die Anzeige des Betriebszustands wenigstens eine weiteres Halbleiterbauteil bzw. elektronisches Bauteil vorgesehen ist, die nur zur Datenübertragung dient. Das wenigstens eine zusätzliche Halbleiterbauteil bzw. elektronische Bauteil kann hinsichtlich seiner Funktion der Datenübertragung optimiert sein. Auf diese Weise die Datenübertragungsrate erhöht und optimiert werden.

Die Funktionseinheit zur Datenübermittlung kann für eine zeitlich und/oder intensitätsgesteuerte Modulation der elektromagnetische Strahlung emittierenden und/oder remittierenden Anzeigeeinrichtung ausgebildet sein. Dabei kann es sich um eine digitale Phasenmodulation handeln, die beispielsweise nach einem ein- oder mehrdimensionalen Manchester Code durchführbar ist. Der Manchester Code wird dabei dazu benützt, um Daten und Taktrate gleichzeitig zu übertragen. Die Übertragung der Taktrate ist erforderlich, da die fototechnischen Erfassungseinrichtungen am tragbaren Datenverarbeitungsgerät in der Regel asynchron zum Takt der elektromagnetische Strahlung emittierenden und/oder remittierenden Anzeigeeinrichtung, beispielsweise der von Leuchtdioden gelieferten statischen und/oder dynamischen Lichtmuster, betrieben werden. In Sinne der Erfindung wird unter der Bezeichnung Manchester Code auch das Protokoll eines differentiellen Manchester Codes verstanden. Ein mehrdimensionaler Manchester Code wird eingesetzt, wenn die Datenübermittlung beispielsweise über mehrere parallel betreibbare Leuchtdioden und oder dergleichen aktive und passive Anzeigeeinrichtungen erfolgt, wobei über alle Leuchtdioden hinweg immer nur mindestens eine Leuchtdiode ihren Zustand von einem Helligkeitswert zum nächsten ändert. Die Modulation kann dabei digital über eine Aktivierung oder Deaktivierung der jeweiligen Leuchtdiode erfolgen. In einer weiteren Ausführungsvariante der Erfindung können die Leuchtdioden auch mit abgestuften Helligkeiten betrieben werden.

Die Datenübermittlung per elektromagnetischer Strahlung erfolgt an ein externes Datenverarbeitungsgerät. Dabei kann es sich um ein stationäres Gerät oder um ein tragbares Gerät handeln. In einer Ausführungsvariante des Datenloggers kann die von der Funktionseinheit zur Datenübermittlung angesteuerte, elektromagnetische Strahlung, insbesondere Licht und/oder Infrarotstrahlung emittierende und/oder remittierende Anzeigeeinrichtung für eine, vorzugsweise visuelle, unidirektionalen Kommunikation mit einem Smartphone, einem Notebook oder einem Tabletcomputer ausgebildet sein. Das Smartphone, der Notebook bzw. der Tabletcomputer weisen eine Kamera zur visuellen Aufnahme von statischen und/oder dynamischen Lichtmustern auf. Zur Erfassung und zur Bearbeitung der übermittelten Daten können sie mit einer Applikation zur Dekodierung und Weiterverarbeitung der von der elektromagnetische Strahlung emittierenden und/oder remittierenden Anzeigeeinrichtung übermittelten Daten ausgestattet sein. Dabei kann die Funktionseinheit zur Datenübermittlung zur Übermittlung der Daten an ein Smartphone, an ein Notebook oder an einen Tabletcomputer mit beliebigem Betriebssystem ausgebildet sein. Insbesondere können das Smartphone bzw. der Tabletcomputer dabei aus der Gruppe bestehend aus Android, iOS, Windows Phone und Blackberry OS aufweisen.

Smartphones, Notebooks und Tabletcomputer sind mittlerweile weit verbreitet. Sie sind und werden mit immer hochwertigeren Kameras ausgestattet, sodass eine Erfassung der über die elektromagnetische Strahlung, insbesondere sichtbares Licht bzw. Infrarotstrahlung emittierende und/oder remittierenden Anzeigeeinrichtung, beispielsweise Leuchtdioden, Flüssigkristallelementen oder elekronisches Papier, übermittelten Daten sehr schnell und zuverlässig vonstatten gehen kann. Die Erfassung und Aufzeichnung der übermittelten Daten erfolgt unabhängig vom Typ des Smartphones, Notebooks bzw. des Tabletcomputers und dessen Betriebssystem.

Die von der Funktionseinheit zur Datenübermittlung angesteuerte elektromagnetische emittierende und/oder remittierende Anzeigeeinrichtung kann auch für eine unidirektionalen Kommunikation mit einem eingebetteten Computersystem ausgebildet sein. Unter einem eingebetteten Computersystem ist dabei ein Datenverarbeitungsgerät zu verstehen, das zum Unterschied von Personal Computern nicht mit den üblichen Peripheriegeräten wie Tastatur, Maus oder Festplatte ausgestattet ist, sondern eine Spezialperipherie wie z.B. funktionelle Tasten, Drehschalter usw. nutzt. Ein eingebettetes Computersystem ist nur für ganz spezifische Aufgaben ausgebildet und benötigt daher nur einen minimalen Aufwand an Hard- und Software. Der Prozessor ist nur zur Erfüllung der spezifischen Aufgabe ausgebildet und kann beispielsweise ein Field Programmable Gate Array (FPGA) oder ein spezieller Application Specific Integrated Circuit (ASIC) sein. Dadurch kann die Leistungsaufnahme des eingebetteten Computersystems sehr gering gehalten werden. Ein eingebettetes Computersystem benötigt oft nicht einmal ein eigenes Betriebssystem bzw. kommt mit speziellen reduzierten Versionen von Standard-Betriebssystemen aus. Anwendungsprogramme, die als sogenannte eingebettete Software ausgeführt werden, sind hinsichtlich ihrer Funktion optimiert und zeichnen sich durch üblicherweise durch einen sehr stabilen Ablauf aus.

In einer besonders einfachen Ausführungsvariante der Erfindung sind die Funktionseinheiten und die Anzeigeeinrichtung auf einer Leiterplatte angeordnet. Die Leiterplatte mit den Funktionseinheiten und der Anzeigeeinrichtung bildet dann den Datenlogger. Zum Schutz vor Feuchtigkeit kann die bestückte Leiterplatte mit einer feuchtigkeitsabweisenden Abdeckung, beispielsweise einer geeigneten Beschichtung versehen sein. In einer weiteren Ausführungsvariante der Erfindung sind die Funktionseinheiten, die auf einer Leiterplatte montiert sein können, innerhalb eines Gehäuses angeordnet. Die Anzeigeeinrichtung ist dann von aussen sichtbar am Gehäuse bzw. innerhalb des Gehäuses montiert.

Ein erfindungsgemässen Verfahren zur Übertragung von Daten von einem Datenlogger zu einem externen, tragbaren Datenverarbeitungsgerät, bei dem in einer Speichereinheit des Datenloggers abgespeicherte digitale Daten gemäss einem Datenprotokoll drahtlos an das externe, tragbare Datenverarbeitungsgerät übertragen werden, zeichnet sich dadurch aus, dass eine Funktionseinheit zur Übermittlung der Daten eine elektromagnetische Strahlung emittierenden und/oder remittierende Anzeigeeinrichtung derart zeitlich gesteuert aktiviert, dass die Daten in kodierter Form als statische und/oder dynamische Muster von elektromagnetischer Strahlung umgesetzt werden. Die statischen und/oder dynamischen Muster elektromagnetischer Strahlung können mittels einer am tragbaren Datenverarbeitungsgerät angeordneten fototechnischen Erfassungseinrichtung erfasst und für eine weitere Bearbeitung im tragbaren Datenverarbeitungsgerät aufgezeichnet werden. Bei den übertragenen Daten kann es sich um vollständige Datensätze oder auch nur um Auszüge von Daten handeln.

Die elektromagnetische Strahlung kann dabei im sichtbaren Wellenlängenspektrum von ca. 380 nm bis ca. 780 nm liegen, oder es kann sich dabei um Infrarotstrahlung von ca. 780 nm bis 1mm handeln. Es sind auch kombinierte Emissionen und/oder Remissionen von sichtbarer Strahlung und Infrarotstrahlung möglich. Unter dem Begriff Licht sind im Sinne der vorliegenden Erfindung daher immer sichtbares Licht und Infrarotstrahlung zu verstehen.

Die Daten können beispielsweise durch eine Modulation von einem oder mehreren am Gerät angeordneten, elektromagnetische Strahlung emittierenden und/oder remittierenden elektronischen Bauteile, beispielsweise Leuchtdioden und/oder Flüssigkristallelementen und/oder elektronisches Papier, an ein Smartphone, ein Notebook bzw. an einen Tabletcomputer, die jeweils mit einer Kamera ausgestattet sind, übermittelt werden. Dabei können die elektronischen Bauteile zeitlich und/oder intensitäts- bzw. helligkeitsgesteuert moduliert werden. Insbesondere kann die Übermittlung der Daten durch eine digitale Phasenmodulation durchgeführt werden, bei der ein ein- oder mehrdimensionalen Manchester Code angewendet wird.

Bei dem externen Datenverarbeitungsgerät kann es sich um ein stationäres Gerät oder um ein tragbares Gerät, beispielsweise um ein Smartphone, ein Notebook oder einen Tabletcomputer handeln, das eine Kamera aufweist und mit einer Applikation ausgestattet sind, die unter wenigstens einem Betriebssystem aus der Gruppe bestehend aus Android, iOS, Windows Phone und Blackberry OS ausführbar ist und mittels welcher die von der lichtemittierenden Anzeigeeinrichtung übermittelten Daten dekodiert und weiterverarbeitet werden. Alternativ kann es sich bei dem externen Datenverarbeitungsgerät auch um ein sogenanntes eingebettetes Computersystem handeln, dessen Definition im Vorstehenden gegeben ist.

Weitere Vorteile und Merkmale ergeben sich aus der nachfolgenden Beschreibung einer beispielsweisen Ausführungsvariante der Erfindung unter Bezugnahme auf die schematischen Zeichnungen. Es zeigen in nicht massstabsgetreuer Darstellung:
- Fig. 1: eine schematische Darstellung eines Ausführungsbeispiels des erfindungsgemässen Datenloggers; und
- Fig. 2: eine schematische Darstellung einer Übermittlung von Daten von einem Datenlogger zu einem mit einer Kamera ausgestatteten tragbaren Datenverarbeitungsgerät.

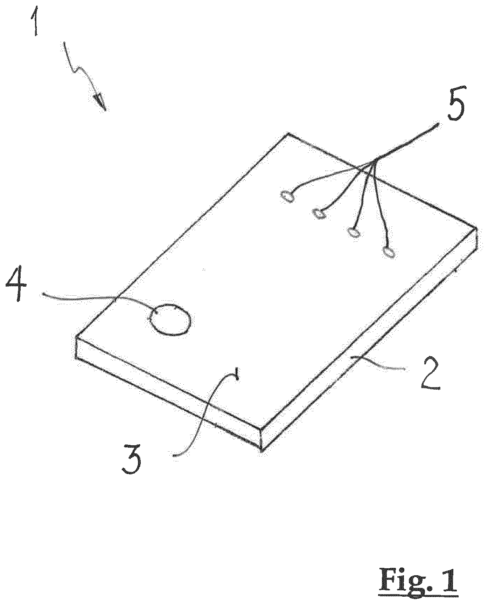

Der in Fig. 1 beispielsweise dargestellte Datenlogger trägt gesamthaft das Bezugszeichen 1. Der Datenlogger 1 weist ein Gehäuse 2 auf, das an seiner Oberseite 3 eine Taste 4 aufweist, über die verschiedene Modi des Datenloggers, beispielsweise Ein/Aus, Messmodus, Übermittlungsmodus, anwählbar sind. Der Datenlogger 1 weist eine Anzahl, im dargestellten Ausführungsbeispiel vier, Leuchtdioden 5 auf, die in die Oberseite 3 des Gehäuses 2 eingelassen sind. Der Datenlogger 1 kann auch noch mit einem oder mehreren Eingängen für einen oder mehrere Messfühler, beispielsweise einem Temperatursensor, einem Feuchtesensor usw. ausgestattet sein. Alternativ können der bzw. die Messfühler auch bereits innerhalb des Gehäuses 2 integriert sein. Innerhalb des Gehäuses 2 sind verschiedene Funktionseinheiten zur Erfassung, Digitalisierung, Speicherung und gegebenenfalls Auswertung von Messdaten sowie zur Übermittlung von Daten angeordnet. Die Funktionseinheiten können mit einem zentralen Mikroprozessor gekoppelt sein, der wiederum über die Taste 4 an der Oberseite 3 des Gehäuses aktivierbar ist und über den die verschiedenen Modi des Datenloggers 1 anwählbar sind. Alternativ können die Funktionseinheiten eigene Mikrocontroller aufweisen. Die Aktivierung der jeweiligen Funktionseinheit erfolgt ebenfalls über die Taste 4 an der Oberseite 3 des Gehäuses 2 des Datenloggers 1.

Weiters ist innerhalb des Gehäuses 2 eine Energieversorgungseinheit angeordnet, welche die Funktionseinheiten mit der erforderlichen Energie versorgt. Beispielsweise wird die Energie von einem Akkumulator, einer Batterie oder dergleichen bereitgestellt. Es kann auch noch eine Solarpanel in die Oberseite des Gehäuses 2 eingelassen sind, über welches ein innerhalb des Gehäuses 2 angeordneter Akkumulator wieder aufladbar ist.

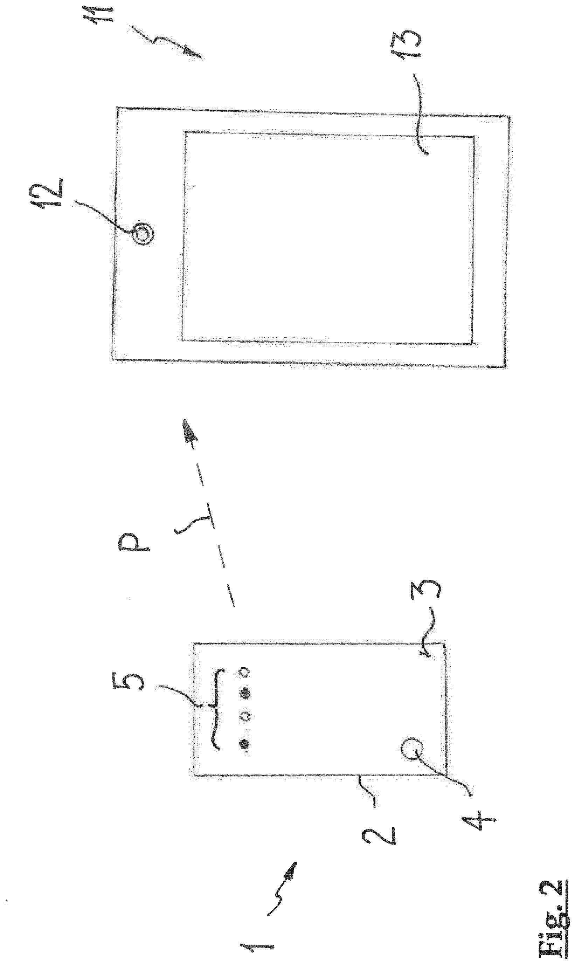

Die in die Oberseite 3 des Gehäuses 2 des Datenloggers 1 eingelassenen Leuchtdioden 5 können beispielsweise einen gerade angewählten Funktionsmodus des Datenloggers anzeigen. Ihre Hauptfunktion besteht jedoch in der visuellen Übermittlung von im Datenlogger 1 abgespeicherten Daten an ein externes, tragbares Datenverarbeitungsgerät. Fig. 2 zeigt eine Kombination eines erfindungsgemäss ausgebildeten Datenloggers, der wiederum mit dem Bezugszeichen 1 versehen ist, mit einem externen Datenverarbeitungsgerät, das gesamthaft mit dem Bezugszeichen 11 versehen ist. Bei dem externen Datenverarbeitungsgerät 11 handelt es sich beispielsweise um ein Smartphone, das mit einer Kamera zur Aufnahme von statischen und bewegten Bildern ausgestattet ist, die mit dem Bezugszeichen 12 angedeutet ist. Es versteht sich, dass das tragbare Datenverarbeitungsgerät auch ein Tabletcomputer oder auch ein Notebookcomputer sein kann, welche jeweils mit einer Kamera zur Aufnahme von statischen und bewegten Bildern ausgestattet sind.

Zur Datenübermittlung vom Datenlogger 1 zum Smartphone 11 wird über die Taste 4 die entsprechende Funktionseinheit des Datenloggers 1 aktiviert. Diese ist mit den Leuchtdioden 5 an der Oberseite 3 des Gehäuses 2 des Datenloggers 1 gekoppelt und übermittelt die Daten durch eine zeitlich und/oder intensitätsmässig gesteuerte Aktivierung der Leuchtdioden 5 in kodierter Form. In Fig. 2 sind die erste und dritte Leuchtdiode von links schwarz gefüllt dargestellt. Dies soll die gesteuerte Aktivierung der Leuchtdioden 5 symbolisieren. Die Übermittlung der Daten an das Smartphone 11 ist durch einen strichlierten Pfeil P angedeutet.

Das Smartphone 11 ist mit einer Applikation ausgestattet, die unter einem oder mehreren Betriebssystemen wie z.B. Android, iOS, Windows Phone und Blackberry OS ausführbar ist. Die von der Kamera 12 aufgezeichneten codierten Lichtpulse der Leuchtdioden 5 des Datenloggers 1 werden von der Applikation wieder zu den übermittelten Daten dekodiert, abgespeichert und können weiterverarbeitet werden. Die Ergebnisse der Weiterverarbeitung können dann beispielsweise über einen Bildschirm 13 des Smartphones 11 in Form eines Berichts ausgegeben werden. Alternativ können die Ergebnisse auch elektronisch, z.B. per E-Mail, in Berichtsform, beispielsweise als PDF-Datei, weitergeleitet werden.

Die innerhalb des Gehäuses 2 des Datenloggers 1 angeordnete Funktionseinheit zur Datenübermittlung kann für eine zeitlich und/oder helligkeitsgesteuerte Modulation der Leuchtdioden 5 ausgebildet sein. Dabei kann es sich um eine digitale Phasenmodulation handeln, die beispielsweise nach einem ein- oder mehrdimensionalen Manchester Code durchführbar ist. Der Manchester Code wird dabei dazu benützt, um Daten und Taktrate gleichzeitig zu übertragen. Das erzeugte Signal garantiert immer Taktflanken, um sowohl die Daten als auch die Taktrate zurückzugewinnen. Die Übertragung der Taktrate ist erforderlich, da die fototechnischen Erfassungseinrichtungen am tragbaren Datenverarbeitungsgerät in der Regel asynchron zum Takt der von den Leuchtdioden gelieferten Lichtimpulse betrieben werden. In Sinne der Erfindung wird unter der Bezeichnung Manchester Code auch das Protokoll eines differentiellen Manchester Codes verstanden. Ein mehrdimensionaler Manchester Code wird eingesetzt, wenn die Datenübermittlung über mehrere parallel betreibbare Leuchtdioden oder dergleichen Anzeigeeinrichtungen erfolgt, wobei über alle Leuchtdioden hinweg immer nur mindestens eine Leuchtdiode ihren Zustand von einem Helligkeitswert zum nächsten ändert. Die Modulation kann dabei digital über eine Aktivierung oder Deaktivierung der jeweiligen Leuchtdiode erfolgen. In einer weiteren Ausführungsvariante der Erfindung können die Leuchtdioden 5 auch mit abgestuften Helligkeiten betrieben werden. Dadurch kann die Übertragungsrate erhöht werden.

Die Erfindung ist am Beispiel eines Datenloggers mit Gehäuse und mit vier am Gehäuse angeordneten Leuchtdioden und eines mit einer Kamera ausgestatteten Smartphones erläutert worden. Es versteht sich, dass der Datenlogger nicht zwingend eine Gehäuse aufweisen muss. Der Datenlogger kann auch von einer Leiterplatte bzw. Platine gebildet sein, auf bzw. an der die verschiedenen Funktionseinheiten und die Anzeigeeinrichtung angeordnet sind. Auch kann der Datenlogger weniger oder auch mehr Leuchtdioden aufweisen, als anhand des beschriebenen Ausführungsbeispiels erläutert. Prinzipiell kann die Datenübermittlung bereits mit nur einer Leuchtdiode durchgeführt werden. Die erzielbare Übertragungsrate ist dabei jedoch noch relativ klein. Der Datenlogger kann anstelle der Leuchtdioden auch eine aktive oder passive Bildschirmanzeige, beispielsweise eine Flüssigkristallanzeibe oder ein Display aus elektronischem Papier, aufweisen. Die Datenübermittlung kann dann beispielsweise durch die Erzeugung von Lichtpulsen auf dem Bildschirm erfolgen. Im Fall einer passiven Anzeigeeinrichtung wird eine Beleuchtung durch eine primäre Lichtquelle benötigt, um die Anzeige für die Kamera erfassbar zu machen. Die Lichtimpulse im sichtbaren und/oder im infraroten Bereich des Wellenlängenspektrums werden von der Kamera des tragbaren Datenverarbeitungsgeräts, das neben einem Smartphone auch ein Tabletcomputer oder ein Notebookcomputer sein kann, erfasst, aufgezeichnet und mit der entsprechenden Applikation dekodiert und weiterverarbeitet.

## Patentansprüche

1. Datenlogger mit einer elektromagnetische Strahlung emittierenden und/oder remittierenden Anzeigeeinrichtung (5) und mit Funktionseinheiten zur Erfassung, Digitalisierung, Speicherung und gegebenenfalls Auswertung von Messdaten und mit einer Funktionseinheit zur drahtlosen Übermittlung von Daten an ein externes Datenverarbeitungsgerät (11), das mit einer fototechnischen Erfassungseinrichtung (12) zur Aufzeichnung von statischen und/oder dynamischen Mustern der elektromagnetischen Strahlung ausgestattet ist, **dadurch gekennzeichnet, dass** die Funktionseinheit zur Übermittlung der Daten für eine intensitätsgesteuerte Modulation der elektromagnetische Strahlung emittierenden und/oder remittierenden Anzeigeeinrichtung ausgebildet ist und derart mit der elektromagnetische Strahlung emittierenden und/oder remittierenden Anzeigeeinrichtung (5) gekoppelt ist, dass die Daten durch eine intensitätsgesteuerte Aktivierung der elektromagnetische Strahlung emittierenden und/oder remittierenden Anzeigeeinrichtung (5) in kodierter Form übermittelbar sind.

2. Datenlogger nach Anspruch 1, **dadurch gekennzeichnet, dass** die elektromagnetische Strahlung emittierende und/oder remittierende Anzeigeeinrichtung (5) ein oder mehrere elektromagnetische Strahlung emittierende und/oder remittierende elektronische Bauteile umfasst.

3. Datenlogger nach Anspruch 2, **dadurch gekennzeichnet, dass** die von den elektronischen Bauteilen emittierte und/oder remittierte elektromagnetische Strahlung Licht im sichtbaren Wellenlängenspektrum und/oder Infrarotstrahlung ist.

4. Datenlogger nach Anspruch 2 oder 3, **dadurch gekennzeichnet, dass** die elektromagnetische Strahlung emittierenden und/oder remittierenden elektronischen Bauteile Halbleiterbauteile umfassen.

5. Datenlogger nach Anspruch 4, **dadurch gekennzeichnet, dass** die Halbleiterbauteile eine oder mehrere Leuchtdioden und/oder Flüssigkristallelemente und/oder elektronisches Papier umfassen.

6. Datenlogger nach Anspruch 5, **dadurch gekennzeichnet, dass** wenigstens eines der Halbleiterbauteile für eine Zustandsanzeige und wenigstens eines der Halbleiterbauteile zur Datenübermittlung ausgebildet ist.

7. Datenlogger nach einem der vorangehenden Ansprüche, **dadurch gekennzeichnet, dass** die Funktionseinheit zur Datenübermittlung für eine zeitlich und intensitätsgesteuerte Modulation der elektromagnetische Strahlung emittierenden und/oder remittierenden Anzeigeeinrichtung (5) ausgebildet ist.

8. Datenlogger nach einem der vorangehenden Ansprüche, **dadurch gekennzeichnet, dass** die Funktionseinheit zur Datenübermittlung zur Ansteuerung der elektromagnetische Strahlung emittierenden und/oder remittierenden Anzeigeeinrichtung (5) mittels einer digitalen Phasenmodulation ausgebildet ist.

9. Datenlogger nach Anspruch 8, **dadurch gekennzeichnet, dass** die digitale Phasenmodulation nach einem ein- oder mehrdimensionalen Manchester Code durchführbar ist.

10. Datenlogger nach einem der vorangehenden Ansprüche, **dadurch gekennzeichnet, dass** die Funktionseinheit zur Datenübermittlung zur Übertragung der Daten an ein Smartphone oder an einen Tabletcomputer mit beliebigem Betriebssystem oder an ein eingebettetes Computersystem ausgebildet ist.

11. Ein System aus einem Datenlogger nach Anspruch 10 und einem externen Datenverarbeitungsgerät (11), das mit einer fototechnischen Erfassungseinrichtung (12) ausgebildet ist, **dadurch gekennzeichnet, dass** die von der Funktionseinheit zur Datenübermittlung angesteuerte elektromagnetische Strahlung emittierende und/oder remittierende Anzeigeeinrichtung (5) für eine unidirektionalen Kommunikation mit einem Smartphone, einem Tablet- oder Notebookcomputer ausgebildet ist, die eine Kamera (12) zur Aufzeichnung von statischen und/oder dynamischen Lichtmustern aufweisen und mit einer Applikation zur Dekodierung und Weiterverarbeitung der von der elektromagnetische Strahlung emittierenden und/oder remittierenden Anzeigeeinrichtung (5) übermittelten Daten ausgestattet sind.

12. System nach Anspruch 11, **dadurch gekennzeichnet, dass** die Funktionseinheit zur Datenübermittlung für eine Übermittlung der Daten an ein Smartphone oder an einen Tabletcomputer mit einem Betriebssystem aus der Gruppe bestehend aus Android, iOS, Windows Phone und Blackberry OS ausgebildet ist.

13. Datenlogger nach einem der vorangehenden Ansprüche, **dadurch gekennzeichnet, dass** die Funktionseinheiten und die Anzeigeeinrichtung auf einer Leiterplatte angeordnet und mit einer feuchtigkeitsabweisenden Abdeckung versehen sind.

14. Datenlogger nach einem der vorangehenden Ansprüche, **dadurch gekennzeichnet, dass** die Funktionseinheiten innerhalb eines Gehäuses angeordnet sind und die Anzeigeeinrichtung von aussen sichtbar am bzw. innerhalb des Gehäuses montiert sind.

15. Verfahren zur Übertragung von Daten von einem Datenlogger (1) zu einem externen Datenverarbeitungsgerät (11), bei dem in einer Speichereinheit des Datenloggers (1) abgespeicherte digitale Daten gemäss einem Datenprotokoll drahtlos an das externe Datenverarbeitungsgerät (11) übertragen werden, **dadurch gekennzeichnet, dass** eine Funktionseinheit zur Übermittlung der Daten eine sichtbar am Datenlogger angeordnete elektromagnetische Strahlung emittierende und/oder remittierende Anzeigeeinrichtung (5) derart zeitlich gesteuert aktiviert, dass die Daten in kodierter Form als statische und/oder dynamische Muster von elektromagnetischer Strahlung von der elektromagnetische Strahlung emittierenden bzw. remittierenden Anzeigeeinrichtung (5) umgesetzt werden, die mittels einer am Datenverarbeitungsgerät (11) angeordneten fototechnischen Erfassungseinrichtung (12) erfasst und für eine weitere Bearbeitung im Datenverarbeitungsgerät (11) aufgezeichnet werden.

16. Verfahren nach Anspruch 15, **dadurch gekennzeichnet, dass** die Daten als statische und/oder dynamische Lichtmuster im sichtbaren Wellenlängenbereich und/oder als Infrarotstrahlung übertragen werden.

17. Verfahren nach Anspruch 15 oder 16, **dadurch gekennzeichnet, dass** die Daten durch Modulation von einem oder mehreren am Datenlogger angeordneten, elektromagnetische Strahlung emittierenden oder remittierenden elektronischen Bauteilen, vorzugsweise Leuchtdioden (5) und/oder Flüssigkristallelementen und/oder elektronisches Papier, an ein Smartphone, an einen Notebook bzw. an einen Tabletcomputer, die jeweils mit einer Kamera (12) ausgestattet sind, übermittelt werden.

18. Verfahren nach Anspruch 17, **dadurch gekennzeichnet, dass** die elektromagnetische Strahlung emittierenden bzw. remittierenden elektronischen Bauteile zeitlich und intensitätsgesteuert moduliert werden.

19. Verfahren nach einem der Ansprüche 15 bis 18, dass die Übermittlung der Daten mit Hilfe einer digitalen Phasenmodulation ausgeführt wird.

20. Verfahren nach Anspruch 19, **dadurch gekennzeichnet, dass** digitale Phasenmodulation nach einem ein- oder mehrdimensionalen Manchester Code durchgeführt wird.

21. Verfahren nach einem der Ansprüche 15 bis 20, **dadurch gekennzeichnet, dass** das externe Datenverarbeitungsgerät mit einer Applikation ausgestattet ist, die unter wenigstens einem Betriebssystem aus der Gruppe bestehend aus Android, iOS, Windows Phone und Blackberry OS, oder mittels einer embedded Version eines Standard-Betriebssystems ausführbar ist und mittels welcher die von der elektromagnetische Strahlung emittierenden und/oder remittierenden Anzeigeeinrichtung übermittelten Daten dekodiert und weiterverarbeitet werden.

## Claims

1. A data logger with a display device (5) which emits and/or remits electromagnetic radiation and with functional units for acquiring, digitalising, storing and possibly evaluating measurement data and with a functional unit for the wireless transfer of data to an external data processing device (11) which is provided with a photo-technical acquisition device (12) for recording static and/or dynamic patterns of the electromagnetic radiation, **characterised in that** the functional unit for the transfer of data is designed for an intensity-controlled modulation of the display device which emits and/or reemits electromagnetic radiation and is coupled to the display device (5) which emits and/or reemits electromagnetic radiation, in a manner such that the data can be transferred in coded form by way of an intensity-controlled activation of the display device (5) which emits and/or remits electromagnetic radiation.

2. A data logger according to claim 1, **characterised in that** the display device (5) which emits and/or remits electromagnetic radiation comprises one or more electronic components which emit and/or reemit electromagnetic radiation.

3. A data logger according to claim 2, **characterised in that** the electromagnetic radiation which is emitted and/or remitted by the electronic components is light in the visible wavelength spectrum and/or infrared radiation.

4. A data logger according to claim 2 or 3, **characterised in that** the components which emit and/or reemit electromagnetic radiation comprise semiconductor components.

5. A data logger according to claim 4, **characterised in that** the semiconductor components comprise one or more light diodes and/or liquid crystal elements and/or electronic paper.

6. A data logger according to claim 5, **characterised in that** at least one of the semiconductor components is designed for a status display and at least one of the semiconductor components is designed for data transfer.

7. A data logger according to one of the preceding claims, **characterised in that** the functional unit for the data transfer is designed for a temporally and intensity-controlled modulation of the display device (5) which emits and/or remits electromagnetic radiation.

8. A data logger according to one of the preceding claims, **characterised in that** the functional unit for data transfer is designed for the activation of the display device (5) which emits and/or remits electromagnetic radiation, by way of a digital phase modulation.

9. A data logger according to claim 8, **characterised in that** the digital phase modulation can be carried out according to a one-dimensional or multi-dimensional Manchester code.

10. A data logger according to one of the preceding claims, **characterised in that** the functional unit for the data transfer is designed for transmitting the data to a smartphone or to a tablet computer with an arbitrary operating system or to an embedded computer system.

11. A system of a data logger according to claim 10 and of an external data processing device (11) which is designed with a photo-technical acquisition device (12), **characterised in that** the display device (5) which emits and/or remits electromagnetic radiation and which is activated by the functional unit for the data transfer is designed for a unidirectional communication with a smartphone, a tablet computer or notebook computer which comprise a camera (12) for recording static and/or dynamic light patterns and are provided with an application for decoding and further-processing the data which is transferred by the display device (5) which emits and/or remits electromagnetic radiation.

12. A system according to claim 11, **characterised in that** the functional unit for data transfer is designed for a transfer of the data to a smartphone or to a tablet computer, with an operating system from the group consisting of Android, iOS, Windows Phone and Blackberry OS.

13. A data logger according to one of the preceding claims, **characterised in that** the functional units and the display device are arranged on a circuit board and are provided with a moisture-repellent covering.

14. A data logger according to one of the preceding claims, **characterised in that** the functional units are arranged within a housing and the display device is assembled on or within the housing in a manner visible from the outside.

15. A method for the transmission of data from a data logger (1) to an external data processing device (11), concerning which digital data which is stored in a memory unit of the data logger (1) is transmitted in a wireless manner to the external data processing device (11) according to a data protocol, **characterised in that** a functional unit for the transfer of the data activates a display device (5) which emits and/or remits electromagnetic radiation and which is visibly arranged on the data logger, in a temporally controlled manner such that the data in coded form as static and/or dynamic patterns of electromagnetic radiation is converted by the display device (5) which emits and/or remits electromagnetic radiation, said data being acquired by way of a photo-technical acquisition device (12) which is arranged on the data processing unit (1) and being recorded in the data processing unit (11) for a further processing.

16. A method according to claim 15, **characterised in that** the data is transmitted as static and/or dynamic light patterns in the visible wavelength region and/or as an infrared radiation.

17. A method according to claim 15 or 16, **characterised in that** the data is transferred to a smartphone, to a notebook or to a tablet computer which are each provided with a camera (12), by way of modulation of one or more components which are arranged on the data logger and emit or remit electromagnetic radiation, preferably light diodes (5) and/or liquid crystal elements and/or electronic paper.

18. A method according to claim 17, **characterised in that** the electronic components which emit or remit electromagnetic radiation are modulated in a temporal and intensity-controlled manner.

19. A method according to one of the claims 15 to 18, **characterised in that** the transfer of the data is executed with the help of digital phase modulation.

20. A method according to claim 19, **characterised in that** digital phase modulation is carried out according to a one-dimensional or multidimensional Manchester Code.

21. A method according to one of the claims 15 to 20, **characterised in that** the external data processing device is provided with an application which can be carried out under at least one operating system from the group consisting of Android, iOS, Windows Phone and Blackberry OS, or by way of an embedded Version of a standard operating system and by way of which the data which is transferred by display device (5) which emits and/or remits electromagnetic radiation is decoded and processed further.

## Revendications

1. Enregistreur de données, comprenant un dispositif d'affichage (5) qui émet et/ou remet un rayonnement électromagnétique , et comprenant des unités fonctionnelles destinées à recueillir, numériser, mémoriser et, le cas échéant, interpréter des données de mesure, et comprenant une unité fonctionnelle destinée à la transmission sans fil de données à un appareil de traitement de données (11) externe qui est équipé d'un dispositif de réception (12) phototechnique destiné à enregistrer des motifs statiques et/ou dynamiques du rayonnement électromagnétique, **caractérisé en ce que** l'unité fonctionnelle destinée à la transmission des données est conçue pour une modulation, contrôlée en intensité, du dispositif d'affichage émettant et/ou réémettant un rayonnement électromagnétique, et est couplée au dispositif d'affichage (5), émettant et/ou réémettant un rayonnement électromagnétique, de manière à ce que les données puissent être transmises sous une forme codée par une activation, contrôlée en intensité, du dispositif d'affichage (5) émettant et/ou réémettant un rayonnement électromagnétique.

2. Enregistreur de données selon la revendication 1, **caractérisé en ce que** le dispositif d'affichage (5), émettant et/ou réémettant un rayonnement électromagnétique, comprend un ou plusieurs composants électroniques émettant et/ou réémettant un rayonnement électromagnétique.

3. Enregistreur de données selon la revendication 2, **caractérisé en ce que** le rayonnement électromagnétique émis et/ou réémis par les composants électroniques est de la lumière située dans le spectre visible des longueurs d'onde et/ou un rayonnement infrarouge.

4. Enregistreur de données selon la revendication 2 ou 3, **caractérisé en ce que** les composants électroniques émettant et/ou réémettant un rayonnement électromagnétique comprennent des composants semi-conducteurs.

5. Enregistreur de données selon la revendication 4, **caractérisé en ce que** les composants semi-conducteurs comprennent une ou plusieurs diodes électroluminescentes et/ou des éléments à cristaux liquides et/ou du papier électronique.

6. Enregistreur de données selon la revendication 5, **caractérisé en ce qu'**au moins un des composants semi-conducteurs est conçu pour un affichage d'état, et au moins un des composants semi-conducteurs est conçu pour la transmission de données.

7. Enregistreur de données selon l'une des revendications précédentes, **caractérisé en ce que** l'unité fonctionnelle destinée à la transmission de données est conçue pour une modulation, contrôlée en temps et en intensité, du dispositif d'affichage (5) émettant et/ou réémettant un rayonnement électromagnétique.

8. Enregistreur de données selon l'une des revendications précédentes, **caractérisé en ce que** l'unité fonctionnelle destinée à la transmission de données est conçue pour l'activation du dispositif d'affichage (5) émettant et/ou réémettant un rayonnement électromagnétique, par le biais d'une modulation de phase numérique.

9. Enregistreur de données selon la revendication 8, **caractérisé en ce que** la modulation de phase numérique peut être réalisée selon un code Manchester à une ou plusieurs dimensions.

10. Enregistreur de données selon l'une des revendications précédentes, **caractérisé en ce que** l'unité fonctionnelle destinée à la transmission de données est conçue pour le transfert des données à un smartphone ou à une tablette dotés de n'importe quel type de système d'exploitation, ou à un système informatique intégré.

11. Système constitué d'un enregistreur de données selon la revendication 10 et d'un appareil de traitement de données (11) externe qui est réalisé avec un dispositif de réception (12) phototechnique, **caractérisé en ce que** le dispositif d'affichage (5) qui émet et/ou réémettant un rayonnement électromagnétique et qui est activé par l'unité fonctionnelle destinée à la transmission de données est conçu pour une communication unidirectionnelle avec un smartphone, une tablette ou un ordinateur portable qui présentent une caméra (12) destinée à l'enregistrement de motifs lumineux statiques et/ou dynamiques et sont dotés d'une application destinée au décodage et au traitement ultérieur des données transmises par le dispositif d'affichage (5) émettant et/ou réémettant un rayonnement électromagnétique.

12. Système selon la revendication 11, **caractérisé en ce que** l'unité fonctionnelle destinée à la transmission de données est conçue pour une transmission des données à un smartphone ou à une tablette dotés d'un système d'exploitation du groupe comprenant les systèmes Android, iOS, Windows Phone et Blackberry OS.

13. Enregistreur de données selon l'une des revendications précédentes, **caractérisé en ce que** les unités fonctionnelles et le dispositif d'affichage sont disposés sur une carte de circuit imprimé et sont pourvus d'un moyen de recouvrement hydrofuge.

14. Enregistreur de données selon l'une des revendications précédentes, **caractérisé en ce que** les unités fonctionnelles sont disposées dans un boîtier et le dispositif d'affichage est monté sur ou dans le boîtier en étant visible de l'extérieur.

15. Procédé de transmission de données depuis un enregistreur de données (1) vers un appareil de traitement de données (11) externe, selon lequel des données numériques stockées dans une unité de mémoire de l'enregistreur de données (1) sont transmises sans fil à l'appareil de traitement de données (11) externe, conformément à un protocole de données, **caractérisé en ce qu'**une unité fonctionnelle destinée à la transmission des données active un dispositif d'affichage (5), qui est monté de façon visible sur l'enregistreur de données et émet et/ou réémet un rayonnement électromagnétique, avec une commande dans le temps telle que les données soient converties sous une forme codée par le dispositif d'affichage (5) émettant et/ou réémettant un rayonnement électromagnétique, en tant que motifs statiques et/ou dynamiques d'un rayonnement électromagnétique qui sont recueillis à l'aide d'un dispositif de réception (12) phototechnique, placé sur l'appareil de traitement de données (11), et sont enregistrés en vue d'un traitement ultérieur dans l'appareil de traitement de données (11).

16. Procédé selon la revendication 15, **caractérisé en ce que** les données sont transmises en tant que motifs lumineux statiques et/ou dynamiques dans la gamme visible des longueurs d'onde et/ou en tant que rayonnement infrarouge.

17. Procédé selon la revendication 15 ou 16, **caractérisé en ce que** les données sont transmises par modulation par un ou plusieurs composants électroniques disposés sur l'enregistreur de données et émettant ou réémettant un rayonnement électromagnétique, de préférence des diodes électroluminescentes (5) et/ou des éléments à cristaux liquides et/ou du papier électronique, à un smartphone, un ordinateur portable ou une tablette, qui sont respectivement équipés d'une caméra (12).

18. Procédé selon la revendication 17, **caractérisé en ce que** les composants électroniques émettant ou réémettant un rayonnement électromagnétique sont modulés avec un contrôle du temps et de l'intensité.

19. Procédé selon l'une des revendications 15 à 18, **caractérisé en ce que** la transmission des données est réalisée à l'aide d'une modulation de phase numérique.

20. Procédé selon la revendication 19, **caractérisé en ce que** l'on réalise une modulation de phase numérique selon un code Manchester à une ou plusieurs dimensions.

21. Procédé selon l'une des revendications 15 à 20, **caractérisé en ce que** l'appareil de traitement de données externe est équipé d'une application qui peut être exécutée sous au moins un système d'exploitation du groupe comprenant Android, iOS, Windows Phone et Blackberry OS, ou par le biais d'une version intégrée d'un système d'exploitation standard, et au moyen de laquelle les données transmises par le dispositif d'affichage émettant et/ou réémettant un rayonnement électromagnétique sont décodées et soumises à un traitement ultérieur.
